# EUROPEAN PATENT SPECIFICATION

(11) **EP 2 412 741 B1**
(45) Date of publication and mention of the grant of the patent: **23.10.2019**
(21) Application number: 10755758.9
(22) Date of filing: 04.02.2010
(51) Int. Cl.: C08G 59/32, C08J 5/24, C08K 5/521, C08K 5/5399, C08L 63/00, C08L 71/10

(54) **EPOXY RESIN COMPOSITION, PREPREG, CARBON FIBER REINFORCED COMPOSITE MATERIAL, AND HOUSING FOR ELECTRONIC OR ELECTRICAL COMPONENT**
EPOXIDHARZZUSAMMENSETZUNG, PREPREG, KOHLENSTOFFFASERVERSTÄRKTES VERBUNDMATERIAL UND GEHÄUSE FÜR ELEKTRONISCHE UND ELEKTRISCHE KOMPONENTEN
COMPOSITION DE RÉSINE ÉPOXYDE, PRÉIMPRÉGNÉ, MATÉRIAU COMPOSITE RENFORCÉ DE FIBRE DE CARBONE, ET COFFRET POUR COMPOSANTS ÉLECTRONIQUES OU ÉLECTRONIQUES

(30) Priority: 25.03.2009 JP 2009073360
(43) Date of publication of application: 01.02.2012
(73) Proprietor: Toray Industries, Inc., Tokyo 103-8666 (JP)
(72) Inventor: MAEDA, Yuki, Iyo-gun Ehime 791-3193 (JP); HONDA, Shiro, Nagoya-shi Aichi 455-8502 (JP); KAWAMOTO, Shiori, Iyo-gun Ehime 791-3193 (JP)
(74) Representative: Mewburn Ellis LLP
(86) International application number: PCT/JP2010/051589
(87) International publication number: WO 2010/109957

(56) References cited:
- EP-A1- 1 775 321
- WO-A1-2005/082982
- WO-A1-2006/001445
- JP-A- 2006 193 618
- JP-A- 2006 193 618
- JP-A- 2008 088 277

## Description

The invention relates to an epoxy resin composition preferred as matrix resin for carbon fiber reinforced composite materials. More specifically, it relates to an epoxy resin composition serving to produce carbon fiber reinforced composite materials with excellent fire retardance, curing properties and mechanical characteristics, a prepreg consisting of said epoxy resin composition and carbon fiber, carbon fiber reinforced composite material produced by curing said prepreg, and housing for electronic/electric components produced from said carbon fiber reinforced composite material.

With lightweight and good mechanical characteristics, fiber reinforced composite materials produced from epoxy resin or other thermosetting resins used as matrix resin, particular carbon fiber reinforced composite materials comprising carbon fiber, have been in very wide use in many fields including production of sports goods such as golf club, tennis racket, and fishing pole, structural members of aircraft and vehicles, and reinforcing material for concrete structures. As carbon fiber has electric conductivity, in addition to good mechanical characteristics, serving to produce composite materials with electromagnetic wave blocking properties, these materials in recent years have been used in housing for electronic/electric devices such as notebook computers and video cameras, resulting in thinner-walled housing and lighter-weight equipment.

In many cases, these carbon fiber reinforced composite materials are manufactured by stacking, heating and pressing prepreg sheets produced by impregnating carbon fiber with a thermosetting resin.

Of the various uses of carbon fiber reinforced composite material, structural members for aircraft and vehicles and construction members particularly are required to be fire retardant so that they do not ignite or burn in the event of a fire. Materials used in electronic/electric equipment also need to be fire retardant to prevent accidents from being caused by ignition and burning of housing and parts exposed to heat from components in the equipment or high-temperature environment.

In such trends, compounds containing halogen such as bromine in their molecules have been used widely to produce fire retardant carbon fiber reinforced composite materials. Specific examples include fire retardant epoxy resin compositions containing brominated epoxy resin or a combination of brominated epoxy resin and antimony trioxide as fire retardants.

However, these halogen-containing resin compositions and their cured products can generate harmful substances such as hydrogen halide when combusted, having adverse influence on human beings and natural environment. Efforts have been made to develop epoxy resin compositions that are highly fire retardant though free from halogens.

The disclosed techniques to provide fire retardant epoxy resin composition free from halogens include a technique to produce red phosphorus or phosphate based matrix resins for carbon fiber reinforced composite materials (for instance, Patent document 1). This technique can produce fire retardant materials without generating halogen gas. However, depending on the content, the use of red phosphorus can lead to resin colored in red, and additional operations are required for production apparatuses and tools used, as compared with resins that are not colored in red, during steps of epoxy resin preparation and prepreg production. In the case of housing of electronic/electric devices, furthermore, the colors of the surface of products produced from such carbon fiber reinforced composite material are limited, posing some problems. When phosphates are used, the phosphorus content in compounds commonly is low compared with red phosphorus, and they should be used in large amounts to achieve an adequate fire retardance, leading to the problem of deterioration in curing properties and heat resistance. For laminate manufacturing, a technique using phenol novolac type epoxy resin and phosphate to achieve an increased fire retardance has been disclosed (for instance, Patent document 2). This technique, however, has the problem of leading not only to epoxy resin with a decreased heat resistance and flexibility, but also a reduced curing rate causing a prolonged curing time and reduced productivity. For sealant manufacturing, a technique using a phosphate and a phosphazene compound in combination with an epoxy resin and a curing agent is disclosed in Patent document 3, in order to maintain a good balance between fire retardance and moisture resistance, but the technique is disadvantageous in that carbon fiber reinforced composite materials with high processability and good mechanical characteristics cannot be produced.

### [Prior art documents]

[Patent document 1] International Publication WO2005/082982
[Patent document 2] Japanese Patent No. 3647193
[Patent document 3] Japanese Unexamined Patent Publication (Kokai) No. 2006-193618
[Patent document 4] EP 1775321 A1

Patent document 4 concerns a flame-retardant epoxy resin composition which contains (A) an epoxy resin containing 0.5 to 10 equivalent /kg of oxazolidone rings, (B) an epoxy group containing phosphazene, (C) at least one compound selected from phosphates, quinone derivatives of phosphine compounds and polyphenylene ethers and (D) a curing agent. A prepreg produced by impregnating the epoxy resin composition in a base material is also disclosed, as well as a laminate formed from the prepreg.

The present invention aims to solve said problems with prior art and provide carbon fiber reinforced composite materials that are highly fire retardant, fast-curing, and heat resistant and have good mechanical characteristics, and also aims to provide an epoxy resin composition and prepreg suitable for production of said carbon fiber reinforced composite materials and provide carbon fiber reinforced composite materials and housing for electronic/electric components.

The epoxy resin composition of the present invention has the following constitution to achieve said objective.

Specifically, the epoxy resin composition contains the following constituent components: an epoxy resin [A] in which 50 mass% or more is accounted for by a compound as represented by the undermentioned Formula (I), a curing agent [B] based on an organic nitrogen compound, a phosphate [C], a phosphazene compound [D], and a thermoplastic resin which is a phenoxy resin [E]: 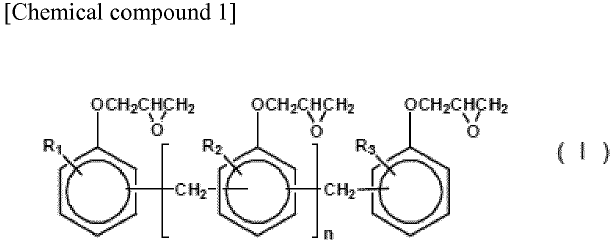 In the formula, R1, R₂, and R₃ denote either a hydrogen atom or a methyl group, and n is an integer of 1 or higher.

A prepreg according to a preferred embodiment of the present invention is produced by impregnating carbon fiber with the epoxy resin composition of the present invention.

A carbon fiber reinforced composite material according to a preferred embodiment of the present invention is produced by heating and curing the prepreg of the present invention.

A carbon fiber reinforced composite material according to a preferred embodiment of the present invention is produced from a prepreg comprising an epoxy resin composition in which the phosphorus content accounts for 1.2 to 4 mass% of the total epoxy resin composition, and a carbon fiber, and has a fire retardance of V-1 or more in UL94 test with specimens with a thickness of 2 mm or less.

It is preferable that the carbon fiber reinforced composite material of the present invention is produced by press molding of the prepreg of the present invention.

The housing for electronic/electric components of the present invention is produced from said carbon fiber reinforced composite material.

### [Effect of the invention]

As described below, the epoxy resin composition of the present invention has good fast-curing, heat resistant and mechanical characteristics, and a carbon fiber reinforced composite material produced by curing a prepreg comprising said epoxy resin composition and carbon fiber has good fire retardant, heat resistant and mechanical characteristics and serves effectively to produce components required to be fire retardant such as housing for electronic/electric components in particular.

### [Description of embodiments]

Described below are epoxy resin compositions, prepregs, carbon fiber reinforced composite materials and housing for electronic/electric components according to the present invention.

Specifically, the epoxy resin composition of the present invention is characterized in that it contains a component [A] of an epoxy resin in which 50 mass% or more is accounted for by a compound as represented by the undermentioned Formula (I), a component [B] of a curing agent based on an organic nitrogen compound, and a component [C] of a phosphate, and a component [D] of a phosphazene compound and component [E] which is a thermoplastic phenoxy resin.

This combination can produce a highly fire retardant carbon fiber reinforced composite material without using conventional fire retardants such as brominated epoxy resin, oxidized antimony and red phosphorus, and in addition serves to produce an epoxy resin composition, prepreg, carbon fiber reinforced composite material, and housing for electronic/electric components that have excellent fast-curing, heat resistant and mechanical characteristics.

The component [A] for the present invention is an epoxy resin in which 50 mass% or more of the total epoxy resin is accounted for by a compound as represented by the undermentioned Formula (I).

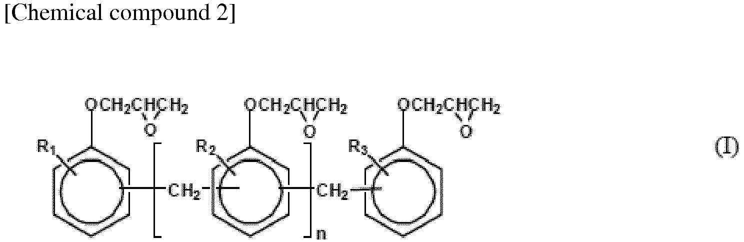

In the formula, R₁, R₂, and R₃ denote a hydrogen atom or a methyl group, and n is an integer 1 or higher.

This serves to provide an epoxy resin composition with good fast-curing properties and heat resistance, and allows a highly fire retardant and heat resistant carbon fiber reinforced composite material to be produced by heating and curing a combination of said epoxy resin composition and carbon fiber.

Examples of the compound represented by Formula (I) to be used for the present invention include, for instance, phenol novolac type epoxy resin and cresol novolac type epoxy resin, and these epoxy resins may be used singly or as a combination of two or more thereof.

Commercial products of phenol novolac type epoxy resin include jER (registered trademark) 152, jER (registered trademark) 154 (supplied by Japan Epoxy Resins Co., Ltd.), Epicron (registered trademark) N-740, Epicron (registered trademark) N-770, Epicron (registered trademark) N-775 (supplied by DIC), PY307, EPN1179, EPN1180 (supplied by Huntsman Advanced Materials Gmbh), YDPN638, YDPN638P (supplied by Tohto Kasei Co., Ltd.), DEN431, DEN438, DEN439 (supplied by The Dow Chemical Company), EPR600 (supplied by Bakelite AG), and EPPN-201 (supplied by Nippon Kayaku Co., Ltd.).

Commercial products of cresol novolac type epoxy resin include jER (registered trademark) 180S (supplied by Japan Epoxy Resins Co., Ltd.), Epicron (registered trademark) N-660, Epicron (registered trademark) N-665, Epicron (registered trademark) N-670, Epicron (registered trademark) N-673, Epicron (registered trademark) N-680, Epicron (registered trademark) N-695, Epicron (registered trademark) N-665-EXP, Epicron (registered trademark) N-672-EXP, Epicron (registered trademark) N-655-EXP-S, Epicron (registered trademark) N-662-EXP-S, Epicron (registered trademark) N-665-EXP-S, Epicron (registered trademark) N-670-EXP-S, Epicron (registered trademark) N-685-EXP-S (supplied by DIC), ECN9511, ECN1273, ECN1280, ECN1285, ECN1299 (supplied by Huntsman Advanced Materials Gmbh), YDCN-701, YDCN-702, YDCN-703, YDCN-704 (supplied by Tohto Kasei Co., Ltd.), CER-1020, EOCN-1020-62, EOCN-1020, EOCN-102S, EOCN-103S, EOCN-104S (supplied by Nippon Kayaku Co., Ltd.), ESCN200L, ESCN220L, ESCN220F, ESCN220HH (supplied by Sumitomo Chemical Co., Ltd.), and EPR650 (supplied by Bakelite AG).

Of the epoxy resins listed above, the compound contained in the component [A] of the present invention and represented by Formula (I) is preferably phenol novolac type epoxy resin from the viewpoint of fire retardance because the methyl group contained in cresol novolac type epoxy resin is highly combustible.

For the present invention, the content of the compound represented by Formula (I) in the component [A] is preferably 50 mass% or more, more preferably 55 mass% or more, and still more preferably 60 mass% or more. An epoxy resin composition produced by blending a compound as represented by Formula (I) up to a content of 50 mass% or more has good fast-curing and heat resistant properties, and the resulting carbon fiber reinforced composite material will have a high fire retardance of V-1 or more according to the UL 94 combustion criteria as described later. The content of the compound represented by Formula (I) should preferably be as high as possible from the viewpoint of fire retardance, curing speed and heat resistance, but it cannot be more than 95 mass% or so because epoxy resins commonly used have a molecular weight distribution.

For the present invention, there are no specific limitations on the integer n in Formula (I) if it is 1 or more, but the fire retardance, curing speed, and heat resistance can increase with an increasing content of a compound with a larger n. It is preferable that a compound with an n of 2 or more as represented by Formula (I) accounts for 80 mass% or more, more preferably 90 mass% or more, of the compound.

In addition to containing a compound with a structure as represented by Formula (I) up to a content of 50 mass% or more, it is preferable that the component [A] of the present invention also contains an epoxy resin as represented by undermentioned Formula (II) from the viewpoint of the prepreg tackiness and drape properties. 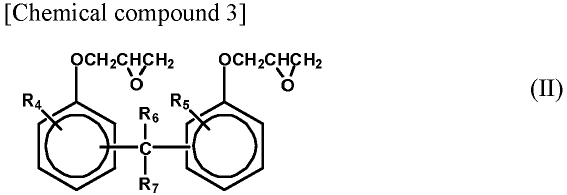 In the formula, R₄, R₅, R₆ and R₇ denote a hydrogen atom or a methyl group.

As described above, it is preferable that the content of the compound as represented by Formula (I) is as high as possible, and the content of the compound with n of 2 or higher is as high as possible from the viewpoint of fire retardant, fast curing and heat resistant properties. On the other hand, the molecular weight of the compound increases with an increasing value of n, and if n is 2 or higher, the compound is commonly solid at room temperature, possibly failing to provide a prepreg with a preferred tackiness and drape properties. Thus, the addition of an appropriate amount of an epoxy resin as represented by Formula (II) serves not only to improve the fire retardant, fast curing, and heat resistant properties but also to provide a prepreg with a preferred tackiness and drape properties.

Examples of the epoxy resin containing an epoxy structure as represented by Formula (II) include, for instance, bisphenol A type epoxy resin, bisphenol F type epoxy resin, and phenol novolac type epoxy resin.

Of the epoxy resins listed above, bisphenol A type epoxy resin and bisphenol F type epoxy resin have been preferred because of a high content of an epoxy structure as represented by Formula (II).

Of the commercial products of bisphenol A type epoxy resin and bisphenol F type epoxy resin, those epoxy resin products which are liquid at a temperature of 25°C have been preferred because they ensure favorable prepreg handleability. Here, being liquid at a temperature of 25°C means that the glass transition temperature or the melting point of the epoxy resin is 25°C or lower and that flowability is maintained at a temperature of 25°C. Said glass transition temperature is defined as the midpoint temperature determined by differential scanning calorimeter (DSC) according to JIS K7121 (1987), and said melting point of a crystalline thermosetting resin is defined as the peak melting temperature determined according to JIS K7121 (1987).

The commercial products of bisphenol A type epoxy resin that are liquid at a temperature of 25°C include EPON (registered trademark) 825, jER (registered trademark) 826, jER (registered trademark) 827, jER (registered trademark) 828 (supplied by Japan Epoxy Resins Co., Ltd.), Epicron (registered trademark) 850 (supplied by DIC Corporation), Epotohto (registered trademark) YD-128 (supplied by Tohto Kasei Co., Ltd.), DER-331, DER-332 (supplied by The Dow Chemical Company), Bakelite (registered trademark) EPR154, Bakelite (registered trademark) EPR162, Bakelite (registered trademark) EPR172, Bakelite (registered trademark) EPR173 and Bakelite (registered trademark) EPR174 (supplied by Bakelite AG).

The commercial products of bisphenol F type epoxy resin that are liquid at a temperature of 25°C include jER (registered trademark) 806, jER (registered trademark) 806L, jER (registered trademark) 807, jER (registered trademark) 1750 (supplied by Japan Epoxy Resins Co., Ltd.), Epicron (registered trademark) 830 (supplied by DIC Corporation), Epotohto (registered trademark) YD-170, Epotohto (registered trademark) YD-175, Epotohto (registered trademark) (supplied by Tohto Kasei Co., Ltd.), Bakelite (registered trademark) EPR169 (supplied by Bakelite AG), EP-4900 (supplied by Adeka Corporation), RE-303S, RE-304S, RE-404S, RE-602 (supplied by Nippon Kayaku Co., Ltd.), GY281, GY282, GY285 and PY306 (supplied by Huntsman Advanced Materials Gmbh).

With respect to comparison between bisphenol A type epoxy resin and bisphenol F type epoxy resin, bisphenol F type epoxy resin is preferred as the component [A] for the present invention, for use as material for housing in particular, because its high elastic modulus serves to produce carbon fiber reinforced composite materials with improved rigidity.

For the present invention, the content of the compound as represented by Formula (II) in the component [A] is preferably 15 to 40 mass%, more preferably 15 to 35 mass%. A preferred tackiness and drape properties can be developed when the content is 15 mass% or more, whereas an excessive tackiness can be prevented and a high fire retardance can be maintained when the content is less than 40 mass%.

The epoxy resin [A] for the present invention may contain an epoxy resin other than said epoxy resin. Specifically, examples of such epoxy resin include those produced from a phenol, amine, carboxylic acid, or intramolecular unsaturated carbon compound.

Examples of epoxy resin produced from a phenol include bisphenol S type epoxy resin, bisphenol AD type epoxy resin, epoxy resin with a biphenyl backbone, resorcinol type epoxy resin, epoxy resin with a naphthalene, tris-phenyl methane type epoxy resin, phenol aralkyl type epoxy resin, dicyclopentadiene type epoxy resin, diphenyl fluorene type epoxy resin, other glycidyl ether type epoxy resins, various isomers thereof, and alkyl-substituted compounds thereof. Also included are urethane- or isocyanate-modified products of an aliphatic epoxy resin such as ethylene glycol glycidyl ether, propylene glycol diglycidyl ether, hexamethylene glycol diglycidyl ether, neopentyl glycol diglycidyl ether, sorbitol polyglycidyl ether, glycerol polyglycidyl ether, or diglycerol polyglycidyl ether, or of an epoxy resin produced from a phenol.

Examples of epoxy resin produced from an amine include N,N,O-triglycidyl-m-aminophenol, N,N,O-triglycidyl-p-aminophenol, N,N,O-triglycidyl-4-amino-3-methyl phenol, N,N-diglycidyl aniline, N,N-diglycidyl-o-toluidine, N,N,N',N'-tetraglycidyl-4,4'-methylene dianiline, N,N,N',N'-tetraglycidyl-2,2'-diethyl-4,4'-methylene dianiline, N,N,N',N'-tetraglycidyl-m-xylylene diamine, 1,3-bis(diglycidyl aminomethyl) cyclohexane, and other glycidyl amine type epoxy resins.

Examples of epoxy resin produced from carboxylic acid include phthalic acid diglycidyl ester, terephthalic acid diglycidyl ester, and other glycidyl ester type epoxy resins.

Examples of epoxy resin produced from a compound with an intramolecular unsaturated carbon bond include vinyl cyclohexene diepoxide, 3,4-epoxycyclohexanecarboxylic acid-3,4-epoxycyclohexyl methyl ester, adipic acid bis-3,4-epoxycyclohexyl methyl ester, and other alicyclic epoxy resins.

The component [B] for the present invention is an organic nitrogen compound based curing agent. For the present invention, an organic nitrogen compound based curing agent refers to a compound that contains in its molecule a nitrogen atom in the form of at least one functional group of amino group, amide group, imidazole group, urea group, and hydrazide group and that can cure epoxy resins. Such organic nitrogen compound based curing agents include, for instance, aromatic amine, aliphatic amine, tertiary amine, secondary amine, imidazole, urea derivative, carboxylic acid hydrazide, Lewis acid complex of these nitrogen compounds, dicyandiamide, tetramethyl guanidine, amine adduct type latent curing agent, and micro capsule type latent curing agent.

Examples of said aromatic amine include 4,4'-diaminodiphenyl methane, 4,4'-diaminodiphenyl sulfone, 3,3'-diaminodiphenyl sulfone, m-phenylene diamine, m-xylylene diamine, and diethyl toluene diamine, while examples of said aliphatic amine include diethylene triamine, triethylene tetramine, isophorone diamine, bis(aminomethyl) norbornane, bis(4-aminocyclohexyl) methane, and dimer acid ester of polyethylene imine. Also included are modified amines produced by reacting an amine with active hydrogen, such as aromatic amine and aliphatic amine, with a compound such as epoxy compound, acrylonitrile, phenol/formaldehyde, and thiourea. Examples of said tertiary amine include N,N-dimethyl piperazine, N,N-dimethyl aniline, triethylene diamine, N,N-dimethyl benzyl amine, 2-(dimethyl aminomethyl) phenol, and 2,4,6-tris-(dimethyl aminomethyl) phenol.

Examples of said secondary amine include piperidine. Examples of said imidazole include 2-methyl imidazole, 2-ethyl-4-methyl imidazole, 2-undecyl imidazole, 2-heptadecyl imidazole, 1,2-dimethyl imidazole, 2-phenyl imidazole, 2-phenyl-4-methyl imidazole, 1-benzyl-2-phenyl imidazole, 1-benzyl-2-methyl imidazole, 1-cyanoethyl-2-methyl imidazole, 1-cyanoethyl-2-ethyl-4-methyl imidazole, 1-cyanoethyl-2-undecyl-imidazole, 1-cyanoethyl-2-phenyl imidazole, 1-cyanoethyl-2-ethyl-4-methyl imidazolium trimellitate, 1-cyanoethyl-2-undecyl imidazolium trimellitate, 1-cyanoethyl-2-phenyl imidazolium trimellitate, 2,4-diamino-6-(2'-methyl imidazolyl-(1')-ethyl-S-triazine, 2,4-diamino-6-(2'-undecyl imidazolyl)-ethyl-S-triazine, 2,4-diamino-6-(2'-ethyl-4-methyl imidazolyl-(1'))-ethyl-S-triazine, 2,4-diamino-6-(2'methyl imidazolyl-(1'))-ethyl-S-triazine-isocyanuric acid addition product, 2-phenyl imidazole-isocyanuric acid adduct, 2-methyl imidazole-isocyanuric acid adduct, 1-cyanoethyl-2-phenyl-4,5-di(2-cyanoethoxy) methyl imidazole, 2-phenyl-4,5-dihydroxymethyl imidazole, and 2-phenyl-4-methyl-5-hydroxymethyl imidazole.

Examples of said carboxylic acid hydrazide include adipic acid hydrazide and naphthalene carboxylic acid hydrazide.

Examples of said urea derivative include 3-phenyl-1,1-dimethyl urea, 3-(3,4-dichlorophenyl)-1,1-dimethyl urea (DCMU), 3-(3-chloro-4-methyl phenyl)-1,1-dimethyl urea, 4,4'-methylene bis(diphenyl dimethylurea), and 2,4-toluene bis(3,3-dimethylurea).

Examples of said Lewis acid complex of a nitrogen compound include boron trifluoride / piperidine complex, boron trifluoride / monoethylamine complex, boron trifluoride / triethanolamine complex, and boron trichloride / octylamine complex.

Said organic nitrogen compound based curing agent [B] for the present invention preferably has thermal activation type latency to ensure stability during resin preparation, preservation stability at room temperature, and stability against thermal history during impregnation of carbon fiber with an epoxy resin composition. Here, a compound with thermal activation type latency is defined as one that is low in activity under normal conditions but increases in activity under certain thermal history conditions as a result of undergoing phase change or chemical change.

Of the organic nitrogen compound based curing agents listed above, dicyandiamide is preferred as the organic nitrogen compound based curing agent [B] for the present invention. Dicyandiamide, which is a solid curing agent at room temperature, does not dissolve significantly in an epoxy resin at 25°C, but dissolves in and reacts with an epoxy group as it is heated up to 100°C or higher. Thus, it is a latent curing agent that is insoluble at low temperatures but soluble at high temperatures.

Preferred examples of said latent curing agent also include an amine adduct type latent curing agent and microcapsule type latent curing agent. Here, said amine adduct type latent curing agent is a compound with a primary, secondary, or tertiary amino group, or a compound produced by allowing the active component of one of the various imidazole compounds to react with another compound reactive with the former so that it becomes high in molecular weight and insoluble at storage temperatures. A microcapsule type latent curing agent actually consists of a core of the curing agent contained in a shell of a polymer, such as epoxy resin, polyurethane resin, polystyrene resin, and polyimide, or cyclodextrin that coat the core to prevent the curing agent from coming in contact with the epoxy resin etc.

Commercial products of said amine adduct type latent curing agent include Amicure (registered trademark) PN-23, PN-H, PN-31, PN-40, PN-50, PN-F, MY-24, and MY-H (supplied by Ajinomoto Fine-Techno Co., Inc.), and Adeka Hardener (registered trademark) EH-3293S, EH-3615S, and EH-4070S (supplied by Adeka Corporation). Commercial products of said microcapsule type latent curing agent include Novacure (registered trademark) HX-3721 and HX-3722 (supplied by Asahi Chemical Industry Co., Ltd.).

For the present invention, the amount of the component [B] added preferably corresponds to 0.6 to 1.4 equivalents relative to the total active hydrogen of the epoxy groups contained in the epoxy resin composition from the viewpoint of heat resistance and mechanical properties. Depending on the type of the organic nitrogen compound based curing agent used, its content is preferably 1 to 15 parts by mass per a total 100 parts by mass of epoxy resin in the case of dicyandiamide for instance. It is more preferably 1 to 10 parts by mass.

For the present invention, the component [B] may be either a single substance or a combination of two or more substances, and may be combined with a curing accelerator other than the component [B] to enhance the curing activity. For instance, dicyandiamide may be preferably combined with a urea derivative or an imidazole. Dicyandiamide, if used singly, requires a curing temperature of about 170 to 180°C, but a combination as described above can cure an epoxy resin composition at 80 to 150°C.

In addition, a Lewis acid such as boron trifluoride / monoethylamine complex and boron trichloride / octyl amine complex may be preferably added in order to accelerate the curing of an aromatic amine such as 4,4'-diaminodiphenyl sulfone and 3,3'-diaminodiphenyl sulfone.

An amine adduct type latent curing agent such as, for instance, Amicure (registered trademark) PN-23 may be preferably combined with a carboxylic acid dihydrazid such as adipic acid dihydrazid in order to accelerate the curing.

Of those listed above, the combination of dicyandiamide with a compound containing two or more urea bonds in one molecule and the combination of dicyandiamide and an imidazole are particularly preferable from the viewpoint of curing properties and stability. Preferable examples of said compound containing two or more urea bonds in one molecule include 4,4'-methylene bis(diphenyl dimethylurea) and 2,4-toluene bis(3,3-dimethylurea), and preferable examples of said imidazole include 2-phenyl-4,5-dihydroxymethyl imidazole and 2-phenyl-4-methyl-5-hydroxymethyl imidazole. The use of these compounds serves to enhance the thermal stability against heat history during the step of resin preparation and the step of impregnating carbon fiber with a resin composition and allow its curing to be completed in 2 to 30 minutes at a temperature of 140 to 160°C.

The component [C] for the present invention is a phosphate. A phosphate is an ester compound of a phosphoric acid with an alcohol compound or with a phenol compound. For the present invention, the addition of a phosphate serves to produce a carbon fiber reinforced composite material with fire retardance.

Specific examples of said phosphate include, for instance, trimethyl phosphate, triethyl phosphate, tributyl phosphate, tri(2-ethylhexyl) phosphate, tributoxy ethyl phosphate, triphenyl phosphate, tricresyl phosphate, trixylenyl phosphate, tris-(isopropyl phenyl) phosphate, tris-(phenyl phenyl) phosphate, trinaphthyl phosphate, cresyl diphenyl phosphate, xylenyl diphenyl phosphate, diphenyl (2-ethylhexyl) phosphate, di(isopropyl phenyl) phenyl phosphate, monoisodecyl phosphate, 2-acryloyl oxy ethyl acid phosphate, 2-methacryloyl oxy ethyl acid phosphate, diphenyl-2-acryloyl oxy ethyl phosphate, diphenyl-2-methacryloyl oxy ethyl phosphate, melamine phosphate, dimelamine phosphate, melamine pyrophosphate, triphenyl phosphine oxide, tricresyl phosphine oxide, methane phosphonate acid diphenyl, phenylphosphonic acid diethyl, resorcinol polyphenyl phosphate, resorcinol poly(di-2,6-xylyl) phosphate, bisphenol A polycresyl phosphate, hydroquinone poly(2,6-xylyl) phosphate, condensation products thereof, and other polyphosphates. Said polyphosphatea include, for instance, resorcinol bis(di-2,6-xylyl) phosphate, resorcinol bis(diphenyl phosphate), and bisphenol A bis(diphenyl phosphate). Commercial products of said resorcinol bis(di-2,6-xylyl) phosphate include PX-200 (supplied by Daihachi Chemical Industry Co., Ltd.). Commercial products of said resorcinol bis(diphenyl phosphate) include CR-733S (supplied by Daihachi Chemical Industry Co., Ltd.). Commercial products of said bisphenol A bis(diphenyl phosphate) include CR-741 (supplied by Daihachi Chemical Industry Co., Ltd.). In particular, resorcinol bis(di-2,6-xylyl) phosphate is preferred from the viewpoint of its excellent curing properties and heat resistance.

The component [D] for the present invention is a phosphazene compound. A phosphazene compound contains a phosphorus atom and a nitrogen atom in one molecule, serving to produce a carbon fiber reinforced composite material with fire retardance. There are no specific limitations on the phosphazene compound if the compound contains no halogen atom and has a phosphazene structure in its molecule. Said phosphazene structure as referred to herein is a structure as represented by the formula: -P(R₂)=N- where R is an organic group. A phosphazene compound is generally represented by formulae (III) and (IV).

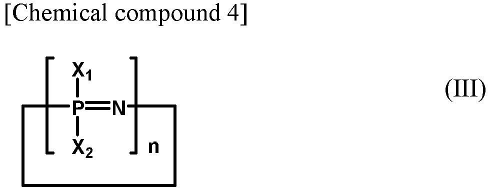

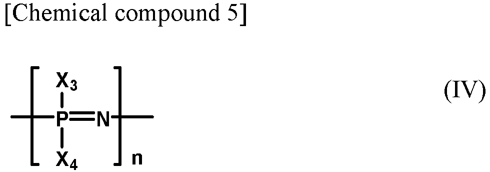

In the formulae, X₁, X₂, X₃, and X₄ denotes a hydrogen, hydroxyl group, amino group, or halogen-free organic group. And n denotes an integer of 3 to 10. Examples of said halogen-free organic group denoted by X₁, X₂, X₃, or X₄ in said Formulae (III) and (IV) include, for instance, alkoxy group, phenyl group, amino group, and allyl group.

Commercial products of said phosphazene compound include SPR-100, SA-100, SPB-100, and SPB-100L (supplied by Otsuka Chemical Co., Ltd.), and FP-100 and FP-110 (supplied by Fushimi Pharmaceutical Co., Ltd.).

For the present invention, combined use of the phosphate [C] and the phosphazene compound [D] as a flame retarder serves to achieve higher fire retardance, curing properties, heat resistance, and mechanical characteristics as compared with the use of only either of them. The addition of the phosphate [C] tends to lead not only to serious deterioration in the curing properties and heat resistance, but also to brittleness in the cured resin due to decreased deflection. Though causing a decrease in elastic modulus, the phosphazene compound [D], on the other hand, not only leads to improved deflection, but also commonly contains more phosphorus atoms in its structure than the phosphate [C], and consequently, its addition in small amounts can work to produce a carbon fiber reinforced composite material with a high fire retardance. Thus it serves to provide products with excellent fire retardance, fast curing properties, heat resistance, and mechanical characteristics, and in particular housing for electronic/electric components with high rigidity and Charpy impact strength, that cannot be achieved by the phosphate [C] used alone.

The total quantity of the phosphate [C] and the phosphazene compound [D] used in combination in the epoxy resin composition of the present invention preferably accounts for 5 to 60 parts by mass, more preferably 10 to 50 parts by mass, per 100 parts by mass of the epoxy resin. A high fire retardance can be achieved easily when their content is 5 parts by mass or more. When it is less than 60 parts by mass, the cured product produced by heating and curing the epoxy resin composition will have high heat resistance, and the carbon fiber reinforced composite material will maintain high-level mechanical characteristics.

The fire retardant effect of the phosphorus atom has been attributed to the ability of the phosphorus atom to promote carbide formation, which is largely influenced by the content of the phosphorus atom in the epoxy resin composition. For the present invention, the content of the phosphorus atom in the entire epoxy resin composition is preferably 1.2 to 4 mass%, more preferably 1.4 to 4 mass%. The fire retardant effect can be developed easily when the phosphorus atom content is 1.2 mass% or more. When it is less than 4 mass%, furthermore, it is possible to produce cured products with high heat resistance and carbon fiber reinforced composite materials with good mechanical characteristics, and in particular, their rigidity and Charpy impact strength can be prevented from deterioration and maintained at a high level. The phosphorus atom content (mass%) referred to here is calculated by the following equation: Mass of phosphorus atom (g) / total mass of epoxy resin composition (g) × 100. Instead of using this equation, the phosphorus atom content in an epoxy resin composition can also be determined from organic element analysis or ICP-MS (inductively coupled plasma mass spectrometry) of the epoxy resin composition or the cured resin.

The phosphate [C] and the phosphazene compound [D] for the present invention each may be a single substance or a combination of two or more substances.

The phosphate [C] and the phosphazene compound [D] for the present invention may be incorporated in the epoxy backbone during the curing reaction or in a dispersed or compatible state in the epoxy resin composition.

In addition, the epoxy resin composition of the present invention may contain one or more other fire retarders to improve the fire retardance.

Such other fire retarders include nitrogen-containing compounds such as melamine cyanurate, melamine sulfate, and guanidine sulfamate; metal hydrates such as aluminum hydroxide, magnesium hydroxide, calcium hydroxide, and tin hydroxide; metal oxides such as zinc borate, zinc hydroxystannate, and magnesium oxide; others such as silicone resin and silicone oil.

The epoxy resin composition of the present invention contains a thermoplastic resin which is a phenoxy resin [E] to control its viscoelasticity and increase its toughness.

Examples of thermoplastic resin as disclosed herein include polymethyl methacrylate, polyvinyl formal, polyvinyl butyral, polyvinyl acetal, polyvinyl pyrolidone, polymer containing at least two constituent components selected from the group of aromatic vinyl monomer, vinyl cyanide monomer and rubber-like polymer, polyamide, polyester, polycarbonate, polyarylene oxide, polysulfone, polyethersulfone, polyimide, and phenoxy resin. Of these, phenoxy resins are preferred because of their high compatibility with epoxy resin and effectiveness in controlling the flowability of epoxy resin compositions, and phenoxy resin is the more preferred because of its high compatibility with the compounds represented by Formula (I) given below as well as its high fire retarding ability.

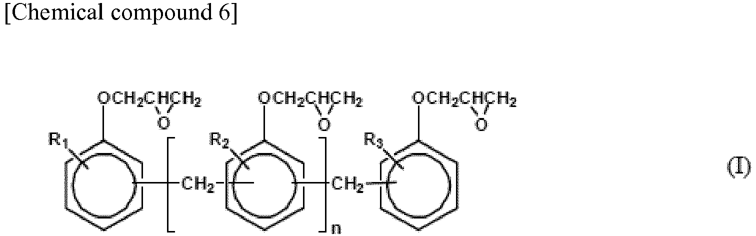

There are no specific limitations on the phenoxy resin used here, and examples include, for instance, phenoxy resins with a bisphenol backbone such as bisphenol A type phenoxy resin, bisphenol F type phenoxy resin, mixed bisphenol A/F type phenoxy resin; phenoxy resins with a naphthalene backbone; and phenoxy resins with a biphenyl backbone.

Commercial products of said bisphenol A type phenoxy resin include YP-50, YP-50S, and YP-55U (supplied by Tohto Kasei Co., Ltd.). Commercial products of said bisphenol F type phenoxy resin include FX-316 (supplied by Tohto Kasei Co., Ltd.). Commercial products of said mixed bisphenol A/F type phenoxy resin include YP-70 and ZX-1356-2 (supplied by Tohto Kasei Co., Ltd.). Of these, bisphenol F type phenoxy resin and mixed bisphenol A/F type phenoxy resin are preferable because of higher compatibility and fire retardance.

With respect to a thermoplastic resin, its content is preferably 0.5 to 10 parts by mass per 100 parts by mass of the epoxy resin. When the content of the thermoplastic resin is 0.5 parts by mass or more, effects such as viscoelasticity control and ductility enhancement can be achieved more easily, and when it is 10 parts by mass or more, furthermore, drape properties of prepregs and fire retardance of carbon fiber reinforced composite materials can be maintained at a high level.

With respect to the epoxy resin composition for the present invention, there are no specific limitations on the molecular weight of the thermoplastic resin components because the preferable molecular weight depends on the type of thermoplastic resin used, but commonly it is preferable to use one with a mass average molecular weight of 10,000 or more. It is more preferably 30,000 to 80,000. This serves to develop the above-mentioned properties effectively. The mass average molecular weight referred to here is the polystyrene-based mass average molecular weight to be determined by GPC (gel permeation chromatography). Examples of the method to measure the mass number average molecular weight include using two Shodex (registered trademark) 80M columns (supplied by Showa Denko K.K.) and one Shodex 802 column (supplied by Showa Denko K.K.), injecting 0.3 µl of a sample, measuring the sample retention time at a flow rate of 1 mL/min, and converting the measured value into a molecular weight based on the retention time measured with a polystyrene sample for calibration. If two or more peaks are observed by liquid chromatography, target components may be separated for calculation of the molecular weight for each peak.

The structures and contents of the compounds contained in the epoxy resin composition of the present invention can be determined by the following method. Specifically, the components are extracted from the epoxy resin composition by ultrasonic extraction using chloroform first and then methanol, and the resulting extracts are analyzed by IR, ¹H-NMR, and ¹³C-NMR spectrum analysis to determine the structures of the compound represented by Formula (I), curing agent based on an organic nitrogen compound, phosphate, and phosphazene. Furthermore, the chloroform extraction liquid thus obtained is subjected to normal phase HPLC using a chloroform/acetonitrile mobile phase, and the peak strength ratio measured from the resulting chromatography graph is compared with the peak strength ratio of known commercial epoxy resin products. Sample preparation and normal phase HPLC analysis are repeated for different compositions of the compounds to determine the contents of the compounds.

If a prepreg is to be produced by impregnating carbon fiber with the epoxy resin composition of the present invention, the viscosity at 50°C is preferably 50 to 30,000 Pa · s, more preferably 50 to 20,000 Pa · s, to develop high processability in terms of tackiness and drape properties. If the viscosity at 50°C is 50 Pa · s or more, the prepreg can maintain its shape more easily and suffer less cracking when it is wound into a roll for storage or pulled for release from the release paper during the lamination step. It also serves to control the resin flow during the molding step and reduce the variation in the fiber content. If the viscosity at 50°C is 30,000 Pa · s or less, on the other hand, it serves effectively to reduces thin spots during the undermentioned step for film formation from the epoxy resin composition by the hot melt method, and prevent significant unimpregnated portions from being left during the carbon fiber impregnation step. The viscosity at 50°C referred to here is determined by the following procedure. Specifically, in a dynamic viscoelasticity measuring apparatus (ARES supplied by TA Instruments Japan), an epoxy resin composition is spaced between parallel plates with a diameter of 40 mm so that the parallel plates are apart by 1 mm from each other, followed by measurement in the twist mode (frequency 0.5 Hz) to determine the complex viscosity η*.

The cured product produced by curing the epoxy resin composition of the present invention preferably has a glass transition temperature of 90 to 250°C, more preferably 90 to 220°C, and still more preferably 95 to 200°C. If the glass transition temperature is 90°C or more, the cured resin will have a high heat resistance and the resulting carbon fiber reinforced composite material will be less liable to deformation in a high temperature environment. If the glass transition temperature is 250°C or less, the cured resin will be less brittle and the resulting carbon fiber reinforced composite material will maintain a high tensile strength and impact resistance. The glass transition temperature referred to here is determined using prepare a test piece with a width of 12.7 mm, length of 45 mm, and thickness of 2 mm from the cured resin, subjecting it to measurement with a dynamic viscoelasticity measuring apparatus (ARES supplied by TA Instruments Japan) in the twist mode (frequency 1 Hz) at a heating rate of 5°C/min, and determining the glass transition temperature, specifically the extrapolated glass transition starting temperature, from the intersection between the baseline on the low temperature side of the stepwise changing portion attributed to glass transition (G') and the tangent line tangent to the curve at a point where the gradient is at a maximum in the stepwise changing portion.

The cured product produced by curing the epoxy resin composition of the present invention preferably has a bending elastic modulus range of 2.5 to 5 GPa, more preferably 2.8 to 5 GPa, as measured according to JIS K7171 (1999). Such a cured product can be obtained by heating the epoxy resin composition from 25°C at a heating rate of 1.5°C/min and curing it for 3 min at a temperature of 150°C. If said cured product has an elastic modulus of 2.5 GPa or more, the carbon fiber reinforced composite material produced by curing said prepreg can easily develop an adequate strength. A higher elastic modulus is more preferable, but a larger bending deflection tends to takes place with an increasing elastic modulus, and in the case of the present invention, a preferred degree of deflection may not be achieved when the elastic modulus is above 5 GPa.

The cured product produced by curing the epoxy resin composition of the present invention preferably has a deflection of 2 mm or more, more preferably 2.5 mm or more, as measured according to JIS K7171 (1999). If said cured product has a deflection of 2 mm or more, the carbon fiber reinforced composite material produced by curing said prepreg can easily achieve a preferred strength in the nonfibrous direction as well as a preferred interlayer shear strength. A larger deflection is more preferable, but for the present invention, the upper limit of deflection is about 6 mm.

It is preferable that the epoxy resin composition of the present invention can be cured quickly when used for manufacturing of industrial materials, such as housing for electronic/electric components in particular, that have to be produced in large numbers in a short period of time, and specifically, the gelation time is preferably 3 minutes or shorter at the molding temperature. It is preferable that gelation takes place more rapidly to improve productivity. The gelation time of an epoxy resin composition as referred to here is measured as follows. Specifically, a 2 cm³ sample is taken from the epoxy resin composition, placed in a die heated at 150°C using a Curelastometer V Type vulcanizing/curing characteristics testing machine (supplied by JSR Corporation Trading Co., Ltd.), subjected to twisting stress, and measuring the torque applied to the die which represents the increase in viscosity caused by curing of the sample. The gelation time is defined as the period from the start of measurement until the torque reaches 0.005 N · m.

The prepreg of the present invention comprises carbon fiber for reinforcement. The use of carbon fiber serves to produce fiber reinforced composite materials with enhanced fire retardance, strength, and impact resistance.

For the present invention, any type of carbon fiber may be adopted depending on its purpose, and commonly, said carbon fiber preferably has a tensile strength in the range of 2 GPa to 12 GPa. A higher tensile strength is more preferable, but the tensile strength is more preferably 3 GPa to 10 GPa, because the carbon fiber has a high tensile strength and can produce a composite material with a higher impact resistance.

Furthermore, such carbon fiber commonly has a tensile modulus in the range of 150 GPa to 1,000 GPa, and the use of carbon fiber with a high tensile modulus serves to produce a fiber reinforced composite material with a high elastic modulus. Parts such as housing for electronic/electric components have to be high in rigidity as they are required to be composed of thin, lightweight walls, and thus, their tensile modulus is more preferably in the range of 200 GPa to 1,000 GPa. The tensile strength and the elastic modulus of carbon fiber referred to here are defined as the strand tensile strength and the strand tensile modulus measured according to JIS R7601 (1986).

With respect to the type of carbon fiber, polyacrylonitrile-, rayon- and pitch-based carbon fibers are used for the present invention. Of these, polyacrylonitrile-based carbon fiber, which is high in tensile strength, is preferred. Polyacrylonitrile-based carbon fiber can be produced by, for instance, carrying out the following steps. A spinning liquid containing polyacrylonitrile produced from a monomer comprising acrylonitrile as primary component is subjected to wet spinning, dry-wet spinning, dry spinning, or melting spinning to produce yarns. After the spinning, coagulated fibers are processed into a precursor in a yarn-making step, followed by steps for fire resistance enhancement and carbonization to provide carbon fiber.

Commercial products of said carbon fiber used for the present invention include Torayca (registered trademark) T700SC-12000 (tensile strength 4.9 GPa, tensile modulus 230 GPa, supplied by Toray Industries, Inc.), Torayca (registered trademark) T800HB-12000 (tensile strength 5.5 GPa, tensile modulus 294 GPa, supplied by Toray Industries, Inc.), Torayca (registered trademark) T800SC-24000 (tensile strength 5.9 GPa, tensile modulus 294 GPa, supplied by Toray Industries, Inc.), and Torayca (registered trademark) M40JB-12000 (tensile strength 4.4 GPa, tensile modulus 377 GPa, supplied by Toray Industries, Inc.).

Described below is a preferred production method for production of the prepreg of the present invention.

The prepreg of the present invention is a sheet-like intermediate material consisting of carbon fiber impregnated with said epoxy resin composition. Thus, impregnation with an epoxy resin composition is preferably carried out by the wet method in which the epoxy resin composition is dissolved in an organic solvent as methyl ethyl ketone and methanol to reduce the viscosity, followed by immersing a fiber sheet comprising carbon fiber to achieve impregnation and evaporating the organic solvent in an oven to provide a prepreg; or the hot melt method in which the epoxy resin composition is heated to reduce its viscosity without using a solvent, processed into a roll of film or a film on release paper, and applied to either or both of the surfaces of a fiber sheet comprising carbon fiber, followed by heating and pressing to achieve impregnation; of which the hot melt method is preferred because the prepreg is virtually free from residual solvents.

When a prepreg is produced by the hot melt method, the maximum temperature reachable for the epoxy resin composition during the step of impregnating carbon fiber with the epoxy resin composition is preferably in the range of 60°C to 150°C, more preferably 80°C to 130°C, in order to provide a prepreg with an appropriate range of handleability. If the maximum temperature is in the appropriate range, it is possible for the carbon fiber to be impregnated sufficiently with the epoxy resin composition, and the epoxy resin composition will not be overheated, preventing the curing reaction from proceeding partially while leaving uncured resin with a higher glass transition temperature. Thus, the resulting prepreg will have a preferred tackiness and drape properties.

In the prepreg of the present invention, the epoxy resin composition may not necessarily enter into the interior of the fiber bundles, but the epoxy resin composition may exist locally near the surface of a sheet of unidirectionally paralleled fibers or a woven fabric.

Said carbon fiber for the prepreg of the present invention may be in the form of unidirectionally paralleled long fibers, bidirectional fabric, multi-axis fabric, nonwoven fabric, mat, knit fabric, or braid, though it is not limited to these forms. The long fiber referred to here is a monofilament or a fiber bundle that is virtually continuous over a length of 10 mm or more.

The so-called unidirectional prepreg comprising unidirectionally paralleled long fibers consists of fibers extending in the same direction and significantly free from bends and therefore, the strength contribution rate in the fiber direction is high. In the case of said unidirectional prepreg, a carbon fiber reinforced composite material having a desired elastic modulus and strength in various directions can be produced by molding a stack of two or more appropriately arranged prepreg sheets.

Various woven fabric prepregs comprising different woven fabrics are also preferred because they serve to produce materials with a reduced anisotropy in strength and elastic modulus and because surface patterns of the fabrics give good appearance. It is also possible to mold a carbon fiber reinforced composite material from a combination of two or more types of prepreg, such as unidirectional prepreg and woven fabric prepreg.

For the prepreg of the present invention, it is preferable that that the content by mass of carbon fiber in the total prepreg (hereinafter, abbreviated as Wf) is 50 to 90 mass%. It is more preferably 60 to 85 mass%, and still more preferably 65 to 85 mass%. If Wf is 50 mass% or more, the content of the matrix resin can be adjusted in a preferred range, and a carbon fiber reinforced composite material with required characteristics such as high fire retardance, specific modulus and specific strength can be produced easily. If Wf is 90 mass% or less, on the other hand, formation of voids in the resulting carbon fiber reinforced composite material will be prevented, and the adhesion between the carbon fiber and the matrix resin is maintained so that the stacked prepreg sheets are adhered adequately with each other to prevent interlayer separation. The Wf referred to here is the fiber content by mass measured according to JIS K7071 (1988).

For the present invention, when a carbon fiber reinforced composite material is to be produced by molding a prepreg, a preferable method is cutting prepreg sheets to a predetermined size, stacking a predetermined number of said sheets, and heating and curing the epoxy resin composition while applying a pressure to the stack.

Examples of said method to heat and cure the epoxy resin composition while applying heat and pressure include press molding, autoclave molding, bagging molding, wrapping tape molding, and internal pressure molding.

The temperature for molding a carbon fiber reinforced composite material is adjusted commonly in the temperature range of 80 to 220°C depending on the type of the curing agent contained in the epoxy resin composition. If the molding temperature is in the appropriate range, it will be possible to easily achieve an adequately high curing speed and prevent warp from being caused by overheating.

The pressure for molding a carbon fiber reinforced composite material is adjusted commonly in the pressure range of 0.1 to 1 MPa depending on the thickness and Wf of the prepreg. If the molding pressure is in the appropriate range, heat can sufficiently reach the interior of the prepreg easily to prevent insufficient curing and warp from taking place locally. This also prevents the formation of voids in the carbon fiber reinforced composite material from being caused by overheated resin flowing out of the prepreg before being cured so that the intended value of Wf can be achieved easily.

The carbon fiber reinforced composite material of the present invention is highly fire retardant and preferably has a fire retardance rating of V-1 or higher, more preferably V-0, at a thickness of 2 mm or less according to the UL94 standard. Assuming that the carbon fiber reinforced composite material of the present invention may be used as material for housing for electronic/electric components with a still smaller wall thickness, it preferably has a higher fire retardance with a rating of V-1 or higher, more preferably V-0, at a thickness of 1.5 mm or less, and furthermore it particularly preferably has a higher fire retardance with a rating of V-1 or higher, more preferably V-0, at a thickness of 1.0 mm or less or even at a thickness of 0.7 mm.

Here, material with a fire retardance rating of V-0 or V-1 meets the V-0 or V-1 requirements specified in the UL94 standard (a combustion test developed by Underwriters Laboratories Inc. in U.S.A.) which is designed for fire retardance evaluation in terms of burning time, combustion state, occurrence/non-occurrence of fire spread, occurrence/non-occurrence of drip, and combustibility of drips.

When using a unidirectional prepreg, it is preferable that the carbon fiber reinforced composite material of the present invention has a tensile strength of 1,000 MPa or more in the fiber direction. If the tensile strength is 1,000 MPa or more in the fiber direction, the carbon fiber reinforced composite material will be able to meet required mechanical characteristics adequately. The tensile strength referred to here is measured according to the method specified in ASTM D3039. The carbon fiber reinforced composite material of the present invention is used preferably for production of housing for electronic/electric components. In particular, housing for electronic/electric components produced according to the invention is suitable for uses where high strength, lightweight and fire retardance are required.

There are no specific limitations on the forms of the carbon fiber reinforced composite material of the present invention as they depend on the purposes, and it may be in the form of a laminate used alone or combined with another member. Examples of said another member may include those made of another carbon fiber reinforced composite material, metal, thermoplastic resin, and resin composition reinforced with carbon fiber, glass fiber, or other reinforcement fibers.

Examples of said metal to be combined include, for instance, aluminum, steel, magnesium, titanium, and alloys thereof.

Examples of said thermoplastic resin to be combined include, for instance, polyesters such as polyethylene terephthalate (PET), polybutylene terephthalate (PBT), polytrimethylene terephthalate (PTT), polyethylene naphthalate (PENP), and liquid crystal polyester; polyolefins such as polyethylene (PE), polypropylene (PP), and polybutylene; styrene-based resins; and others such as polyoxy methylene (POM), polyamide (PA), polycarbonate (PC), polymethylene methacrylate (PMMA), polyvinyl chloride (PVC), polyphenylene sulfide (PPS), polyphenylene ether (PPE), modified PPE, polyimide (PI), polyamide-imide (PAI), polyetherimide (PEI), polysulfone (PSU), modified PSU, polyethersulfone, polyketone (PK), polyether ketone (PEK), polyether ether ketone (PEEK), polyether ketone ketone (PEKK), polyallylate (PAR), polyether nitrile (PEN), phenolic resin, phenoxy resin, polytetrafluoroethylene, and other fluorine-based resins; as well as copolymers thereof, modified products thereof, and blend resin of two or more thereof.

In particular, it is preferable that a thermoplastic resin reinforced with reinforcement fiber is used as said thermoplastic resin to be combined as said another member, because it will be possible to provide lightweight products that cannot be produced by using a metal material as said another member to be combined.

To combine the carbon fiber reinforced composite material of the present invention with another member, an adhesive may be used or the two members may be welded using a thermoplastic resin composition layer between them. Or they may be joined mechanically by fitting, mating or using bolts or screws.

If the carbon fiber reinforced composite material of the present invention is to be used as material for housing for electronic/electric components, it should preferably be high in rigidity because such housing should be resistant to deformation under load applied to the top, bottom or lateral sides. The rigidity referred to here is determined as follows. Using a material testing machine such as, for instance, an Instron type universal tester (supplied by Instron Corporation), measurements are made under the conditions of a test piece size of 100 mm × 70 mm, compression platen diameter of 20 mm, and crosshead travel rate of 5 mm/min to determine the deflection under a load of 50 N. For evaluation, a test piece with a small deflection is assumed to be high in rigidity. It is preferable that the carbon fiber reinforced composite material of the present invention shows a deflection of 1.5 mm or less when a load of 50 N is applied.

If the carbon fiber reinforced composite material of the present invention is to be used as material for housing for electronic/electric components, it is preferable that the material can absorb impact efficiently when falling to the floor, and therefore, that it is high in Charpy impact value. When using a unidirectional prepreg, the Charpy impact value is preferably 100 J/m² or more. It is more preferably 150 J/m² or more, and still more preferably 200 J/m² or more. The Charpy impact value referred to here is measured according to the method described in JIS K7077 (1991). There are no specific upper limits to the Charpy impact value, and a higher value is more preferable because the material can absorb a larger impact when falling down, and the component made of it will have a higher durability.

### [Example]

The epoxy resin composition of the present invention, prepreg, carbon fiber reinforced composite material, and housing for electronic/electric components are described in more detail below with reference to Examples. The components and the epoxy resin composition preparation procedures used Examples are described in items (1) and (2) below, and the prepreg production procedure is described in item (6) below. For Examples, various characteristics (physical properties) were determined as described in items (3) to (5) and (7) to (12). Measurements of these physical properties were made in an environment at a temperature of 23°C and a relative humidity 50% unless otherwise specified.

### (1) Components of resin composition and carbon fiber

### Epoxy resin

Epicron (registered trademark) N-770 (solid phenol novolac type epoxy resin, R in Formula (I) representing H, the compound represented by Formula (I) accounting for 91%, supplied by DIC)
jER (registered trademark) 154 (semisolid phenol novolac type epoxy resin, R in Formula (I) representing H, the compound represented by Formula (I) accounting for 83%, supplied by Japan Epoxy Resins Co., Ltd.)
jER (registered trademark) 152 (semisolid phenol novolac type epoxy resin, R in Formula (I) representing H, the compound represented by Formula (I) accounting for 62%, supplied by Japan Epoxy Resins Co., Ltd.)
jER (registered trademark) 806 (liquid bisphenol F type epoxy resin, the compound represented by Formula (I) accounting for 0%, supplied by Japan Epoxy Resins Co., Ltd.)
jER (registered trademark) 828 (liquid bisphenyl A type epoxy resin, the compound represented by Formula (I) accounting for 0%, supplied by Japan Epoxy Resins Co., Ltd.)
jER (registered trademark) 834 (liquid bisphenyl A type epoxy resin, the compound represented by Formula (I) accounting for 0%, supplied by Japan Epoxy Resins Co., Ltd.)
jER (registered trademark) 1001 (solid bisphenyl A type epoxy resin, the compound represented by Formula (I) accounting for 0%, supplied by Japan Epoxy Resins Co., Ltd.)

The percentage following the phrase "the compound represented by Formula (I) accounting for" shows the content of the compound represented by Formula (I) (in which n is 1 or more) in each commercial epoxy resin product.

### Organic nitrogen compound based curing agent (component [B])

Dicy 7 (dicyandiamide, supplied by Japan Epoxy Resins Co., Ltd.)
Omicure (registered trademark) 24 (2,4'-toluene bis(3,3-dimethylurea), supplied by PTI Japan Ltd.)
Omicure (registered trademark) 52 (4,4'-methylene bis(diphenyl dimethylurea), supplied by PTI Japan Ltd.)
DCMU-99 (3,4-dichlorophenyl-1,1-dimethylurea, supplied by Hodogaya Chemical Co., Ltd.) 2P4MHZ (2-phenyl-4-methyl-5-hydroxymethyl imidazole, supplied by Shikoku Chemicals Corporation industry)

### Phosphate (component [C])

PX-200 (resorcinol bis(di-2,6-xylyl) phosphate, phosphorus content 9.0%, supplied by Daihachi Chemical Industry Co., Ltd.)
CR-733S (resorcinol bis(diphosphate), phosphorus content 10.9%, supplied by Daihachi Chemical Industry Co., Ltd.)

### Phosphazene compound (component [D])

SPB-100 (phosphonitrilic acid phenyl ester, phosphorus content 13.4%, supplied by Otsuka Chemical Co., Ltd.)
FP-110 (phosphonitrilic acid phenyl ester, phosphorus content 13.4%, supplied by Fushimi Pharmaceutical Co., Ltd.)

### Thermoplastic resin (component [E])

YP-50 (bisphenol A type phenoxy resin, supplied by Tohto Kasei Co., Ltd.)
YP-70 (bisphenol A/F type copolymerization phenoxy resin, supplied by Tohto Kasei Co., Ltd.) FX-316 (bisphenol F type phenoxy resin, supplied by Tohto Kasei Co., Ltd.)
Vinylec (registered trademark) K (polyvinyl formal, Chisso Corporation) Carbon fiber
Torayca (registered trademark) T700SC-12000 (tensile strength 4.9 GPa, tensile modulus 230 GPa, supplied by Toray Industries, Inc.).

### (2) Preparation of epoxy resin composition

Predetermined quantities of an epoxy resin, thermoplastic resin, phosphate, and phosphazene compound were put in a kneader, heated up to a temperature of 160°C while kneading. The solid components were dissolved completely, and a transparent viscous liquid was obtained. The kneading was continued until the liquid cooled to a temperature of 50 to 60°C. A predetermined quantity of an organic nitrogen compound based curing agent was added, and dispersed uniformly by attiring for 30 minutes to provide an epoxy resin composition.

### (3) Gelation time of epoxy resin composition

A 2 cm³ sample was taken out of the epoxy resin composition, and the gelation time at 150°C was determined while analyzing the curing of the resin with a Curelastometer V Type testing machine (supplied by JSR Corporation Trading Co., Ltd.). The gelation time is defined as the time period from the start of measurement until the torque reaches 0.005 N · m.

### (4) Glass transition temperature of cured resin

An uncured epoxy resin composition was deaerated in a vacuum, placed in a mold set to a thickness of 2 mm using a Teflon (registered trademark) spacer with a thickness of 2 mm, heated from 25°C at a heating rate 1.5°C/min, and cured at a temperature of 150°C for 3 minutes and then at a temperature of 130°C for 2 hours to provide cured resin with a thickness of 2 mm. A test piece with a width of 12.7 mm and a length of 45 mm was cut out from this cured resin and subjected to measurement with a dynamic viscoelasticity measuring apparatus (ARES supplied by TA Instruments Japan) under the conditions of a frequency of 1 Hz, heating range from 25 to 250°C and heating rate of 5°C/min. The glass transition temperature, specifically the extrapolated glass transition starting temperature, was determined from the intersection between the baseline on the low temperature side of the stepwise changing portion attributed to glass transition (G') and the tangent line tangent to the curve at a point where the gradient is at a maximum in the stepwise changing portion.

### (5) Measurement of bending elastic modulus and deflection of resin

A test piece with a width of 10 mm and a length of 60 mm was cut out from the cured resin produced in item (4) above, and a three-point bending test was carried out according to JIS K7171 (1999) using an Instron type universal tester (supplied by Instron Corporation) under the conditions of a span of 32 mm and a crosshead travel rate of 2.5 mm/min to determine the elastic modulus and deflection. Five samples were tested (n = 5), and the average was taken for evaluation.

### (6) Preparation of prepreg

For the present invention, prepreg samples were prepared as follows. Using a reverse roll coater, the epoxy resin composition produced in item (2) was spread over release paper to produce a resin film with a metsuke (weight per unit surface area) of 25 g/m². Then, a sheet of unidirectionally aligned carbon fibers with a fiber mass per unit area 100 g/m² was sandwiched between two sheets of said resin film, which were then heated at a temperature of 95°C and pressed at a pressure of 0.2 MPa for impregnation with the epoxy resin composition to provide a unidirectional prepreg with a Wf of 67%.

### (7) Tackiness of prepreg

To determine the tackiness of a prepreg with a tack tester (PICMA tack tester II, supplied by Toyo Seiki Co., Ltd.), a cover glass with a size of 18 × 18 mm was pressed against the prepreg for 5 seconds at a pressure of 0.4 kgf to achieve pressure bonding, and then it was pulled at a rate of 30 mm/min to measure the resistance force at the time of peeling. The tackiness was evaluated according to the following three stage criteria. Seven samples were tested (n = 7). The maximum and minimum measurements were omitted, and the remaining five measurements were averaged to give a value for evaluation.
○: Tackiness of 0.3 kg or more and 2.0 kg or less, good adhesion.
Δ: Tackiness of 0.1 kg or more and less than 0.3 kg, or larger than 2.0 kg and 3.0 kg or less, slightly too strong adhesion or slightly too weak adhesion.
×: Tackiness of 0.0 kg or more and less than 0.1 kg, or larger than 3.0 kg, too strong adhesion or no adhesion.

### (8) Glass transition temperature of carbon fiber reinforced composite material

Sheets of the prepreg were stacked with their fibers aligned in the same direction and molded in a hot press by heating them at temperature of 150°C for 3 minutes under a pressure of 0.6 MPa to provide a carbon fiber reinforced composite material. A test piece with a mass of 10 mg was cut out from the resulting carbon fiber reinforced composite material, and its glass transition temperature was measured by differential scanning calorimetry (DSC) according to JIS K7121 (1987). Measurements were made in a nitrogen atmosphere at a heating rate of 40°C/min, and the mid-point glass transition temperature was determined from the stepwise changing portion of the DSC curve. A Pyris DSC differential scanning calorimeter (supplied by Perkinelmer Instruments Inc.) was used.

### (9) Fire retardance

Sheets of the prepreg were stacked with their fibers aligned in the same direction and molded in a hot press by heating them at temperature of 150°C for 3 minutes under a pressure of 0.6 MPa to provide carbon fiber reinforced composite material sheets with a thickness of 0.6-0.7 mm or 0.19-0.21 mm. The fire retardance of each sheet was measured.

The fire retardance evaluation was carried out based on the vertical combustion test according to the UL94 standard. Five test pieces with a width of 12.7±0.1 mm and a length of 127±1 mm were cut out from a molded carbon fiber reinforced composite material. A burner was adjusted to a flame height of 19 mm, and the bottom-center portion of a vertically held test piece was exposed to the flame for 10 seconds, followed by moving it away from the flame and measuring the combustion time. If the flame went out, the test piece was immediately exposed to the flame of the burner for 10 seconds, and the combustion time was measured after moving it away from the burner. A material is rated as V-0 if it meets all of the following requirements: there are no flaming drips; it stops burning within 10 seconds after two applications of ten seconds each of a flame; and the total combustion time for ten applications of a flame to five test pieces is 50 seconds or less. It is rated as V-1 if the combustion time after each application of a flame is 30 seconds or less and the total combustion time for ten applications of a flame is 250 seconds or less. It is rated as V-2 if there are flaming drips though the V-1 requirements for combustion times are met, and rated as V-out if the combustion times are longer or the entire test piece (bottom to the clamp) burns out.

### (10) 0° tensile test

Sheets of the prepreg were stacked with their fibers aligned in the same direction and molded in a hot press by heating them at temperature of 150°C for 3 minutes under a pressure of 0.6 MPa to provide a unidirectional carbon fiber reinforced composite material with a thickness of 1±0.05 mm. A glass tab with a length of 56 mm and a thickness of 1.5 mm was bonded to both sides of the resulting carbon fiber reinforced composite material, and a test piece with a width of 12.7±0.1 mm and a length of 250±5 mm was cut out with its length direction coinciding with the 0° direction and tested at a tension speed 2.0 mm/min according to the method described in ASTM D3039 to determine the 0° tensile strength. Six samples were tested (n = 6), and the average was taken for evaluation.

### (11) Rigidity test

Sheets of the prepreg were stacked with their fibers aligned as (0/90/45)s and molded in a hot press by heating them at temperature of 150°C for 3 minutes under a pressure of 0.6 MPa to provide a carbon fiber reinforced composite material with a thickness of 0.6±0.05 mm. A test piece was cut out, with its length direction coinciding with the 45° direction, from the resulting carbon fiber reinforced composite material, and fixed on a frame in such a manner that the test piece excluding the portions used for fixing had a width of 70 mm and a length of 100 mm. Using an Instron type universal tester (supplied by Instron Corporation), measurements were made under the conditions of a compression platen diameter of 20 mm and a crosshead travel rate of 5 mm/min to determine the deflection under a load of 50 N. Five samples were tested (n = 5), and the average was taken as their deflection for evaluation.

### (12) Charpy impact test

Sheets of the prepreg were stacked with their fibers aligned in the same direction and molded in an autoclave by heating them at temperature of 150°C for 3 minutes under a pressure of 0.6 MPa to provide a unidirectional carbon fiber reinforced composite material with a thickness of 3±0.05 mm. A test piece with a width of 10±0.2 mm and a length of 80±1 mm was cut out, with its length direction coinciding with the 0° direction, from the resulting carbon fiber reinforced composite material, and an impact was applied to the center of the test piece according to the method described in JIS K7077 under the conditions of a distance between specimen clamps of 60 mm, a moment about the hammer rotation axis of 295 N · m, and a lifting angle of 134.5°. The Charpy impact value was determined from the swing-up angle after breakage of the test piece. A Charpy impact testing machine supplied by Yonekura Mfg. Co., Ltd. was used for the test.

Results of Examples 1 to 18 and those of Comparative examples 1 to 5 are given in Tables 1 and 2. Figures for the epoxy resin composition given in Tables 1 and 2 are in parts by mass. Example 13 is a reference example.

### (Example 1)

Using Epicron (registered trademark) N-770 and jER (registered trademark) 154 as the component [A], Dicy7 and Omicure (registered trademark) 24 as the component [B], PX-200 as the component [C], SPB-100 as the component [D], and YP-50 as said thermoplastic resin, as shown in Table 1, an epoxy resin composition was prepared in which the content of the compound represented by Formula (I) in the component [A] was 87% and the phosphorus content was 1.2%. Its gelation time was 87 seconds and it was able to be cured in 3 minutes. The cured resin had a favorable Tg of 160°C. The cured resin had an elastic modulus of 3.8 GPa, and a deflection of 3.3 mm, showing well balanced characteristics. The composite material had a fire retardance rating of V-1 at a thickness 0.6-0.7 mm and V-0 at a thickness of 0.19-0.21 mm, showing adequate fire retardant properties. The composite material had a sufficiently high Tg of 153°C after being cured at 150°C for 3 minutes. It also had good mechanical characteristics including 0° tensile strength, rigidity after molding, and Charpy impact value.

### (Example 2)

Except for using Omicure (registered trademark) 52 instead of Omicure (registered trademark) 24 as the component [B], increasing the quantity of SPB-100 used as the component [D] from 5 parts to 10 parts to adjust the phosphorus content to 1.7%, and using YP-70 instead of YP-50 as thermoplastic resin, the same procedure as in Example 1 was carried out to prepare a cured resin, prepreg, and composite material. When evaluated, the composite material was found to have a fire retardance rating of V-0 at both thicknesses of 0.6-0.7 mm and 0.19-0.21 mm. The cured resin, composite material, and moldings also had good characteristics.

### (Examples 3 and 4)

Except for increasing the total content of the component [C] and the component [D] to 30 parts by mass and using YP-70 thermoplastic resin as in Example 2, the same procedure as in Example 1 was carried out to prepare a cured resin, prepreg, and composite material. When the characteristics of the composite material were evaluated, it was found to have a fire retardance rating of V-0 at both thicknesses of 0.6-0.7 mm and 0.19-0.21 mm. In Example 3 in which the phosphate was added to 20 parts by mass, the composite material had a sufficient Tg though slightly lower, and had good characteristics in other aspects.

### (Example 5)

Except for increasing the content of Omicure (registered trademark) 24 used as the component [B] to 6 parts by mass and increasing the total content of the component [C] and the component [D] to 50 parts to adjust the phosphorus content to 3.3%, and using YP-70 thermoplastic resin as in Example 2, the same procedure as in Example 1 was carried out to prepare a cured resin, prepreg, and composite material. The gelation time was 130 seconds, indicating a slightly slower gelation speed. The Tg of the cured resin, Tg of the composite material, and the Charpy impact value were all at a sufficient level though slightly lower, and they had good characteristics in other aspects.

### (Example 6)

Except for using Epicron (registered trademark) N-770 and jER (registered trademark) 152 as the component [A] and Dicy 7 and Omicure (registered trademark) 24 as the component [B] under the conditions where the compound represented by Formula (I) accounted for 82% in the component [A], the same procedure as in Example 2 was carried out to prepare a cured resin, prepreg, and composite material. Characteristics evaluation showed that the cured resin, composite material, and moldings had good characteristics. The prepreg also had a higher tackiness than in Examples 1 to 5, and thus had a high suitability.

### (Example 7)

A cured resin, prepreg, and composite material was prepared using jER (registered trademark) 154, jER (registered trademark) 152, and jER (registered trademark) 806 as the component [A] and an increased quantity of 5 parts by mass of YP-70 as thermoplastic resin under the conditions where the compound represented by Formula (I) accounted for 63% in the component [A]. The composite material had a fire retardance rating of V-1 at a thickness of 0.6-0.7 mm and V-0 at a thickness of 0.19-0.21 mm. The gelation time was sufficiently short, though slightly longer than in Example 6 where the compound represented by Formula (I) accounts for a larger proportion in the component [A], and good characteristics were proved in other aspects.

### (Example 8)

A cured resin, prepreg, and composite material was prepared using N-770 and jER (registered trademark) 828 as the component [A] under the conditions where the compound represented by Formula (I) accounted for 55% in the component [A]. The composite material had a fire retardance rating of V-1 at both thicknesses of 0.6-0.7 mm and 0.19-0.21 mm. Though at a sufficiently high level, the gelation time was a longer 136 seconds and the composite material had a lower Tg as compared with Example 2, Example 6 and Example 7 where the component [C] accounted for the same proportion, and similarly good characteristics were proved in other aspects.

### (Example 9)

Except for using CR-733S instead of PX-200 as the component [C], the same procedure as in Example 3 was carried out to prepare a cured resin, prepreg, and composite material. As compared with Example 3, the gelation time was a longer 147 seconds, and evaluation results in cured resin's deflection, composite material's Tg, and Charpy impact value were slightly inferior, though at a sufficiently high level. The composite material had a fire retardance rating of V-0 at both thicknesses of 0.6-0.7 mm and 0.19-0.21 mm.

### (Example 10)

A cured resin, prepreg, and composite material were prepared using DCMU-99 as the component [B]. As compared with Examples 2 and 3 where Omicure (registered trademark) 52 and Omicure (registered trademark) 24 were used, the gelation time was a longer 141 seconds and the composite material had a lower Tg, though at a sufficiently high level. The composite material had a fire retardance rating of V-0 at both thicknesses of 0.6-0.7 mm and 0.19-0.21 mm, and also had good characteristics in other aspects.

### (Example 11)

As in Example 10, a cured resin, prepreg, and composite material were prepared using DCMU-99 as the component [B]. The gelation time was a slightly longer 131 seconds and the composite material had a lower Tg, though at a sufficiently high level. The composite material had a fire retardance rating of V-0 at both thicknesses of 0.6-0.7 mm and 0.19-0.21 mm, and also had good characteristics in other aspects.

### (Example 12)

A cured resin, prepreg, and composite material were prepared using 2P4MHZ as the component [B]. Characteristics evaluation showed that the composite material had a fire retardance rating of V-0 at both thicknesses of 0.6-0.7 mm and 0.19-0.21 mm, and that the cured resin, composite material, and moldings also had good characteristics.

### (Example 13) - Reference Example

A cured resin, prepreg, and composite material was prepared using Vinylec (registered trademark) K as thermoplastic resin. Characteristics evaluation showed that moldings had a slightly lower 0° tensile strength and Charpy impact value, though at a sufficiently high level. Good characteristics were proved in other aspects.

### (Examples 14 and 15)

A cured resin, prepreg, and composite material was prepared using Epicron (registered trademark) N-770, jER (registered trademark) 806, and jER (registered trademark) 828 as the component [A] under the conditions where the compound represented by Formula (I) with an n of 2 or more accounted for an increased 92% and the compound represented by Formula (II) accounted for 32%. Characteristics evaluation showed that the composite material had a fire retardance rating of V-0 at both thicknesses of 0.6-0.7 mm and 0.19-0.21 mm, and that the prepreg also had a satisfactory tackiness. The cured resin, composite material, and moldings also had good characteristics.

### (Example 16)

Using Epicron (registered trademark) N-770, jER (registered trademark) 154 and jER (registered trademark) 828 as the component [A], the same procedure as in Examples 14 and 15 was carried out to prepare a cured resin, prepreg, and composite material. Characteristics evaluation showed that the composite material had a fire retardance rating of V-0 at both thicknesses of 0.6-0.7 mm and 0.19-0.21 mm, and that the prepreg also had a satisfactory tackiness. The cured resin, composite material, and moldings also had good characteristics.

### (Example 17)

A cured resin, prepreg, and composite material were prepared using Epicron (registered trademark) N-770 alone as the component [A]. The cured resin, composite material, and moldings had good characteristics, but the prepreg was poor in tackiness and accordingly low in handleability.

### (Example 18)

A cured resin, prepreg, and composite material were prepared using jER (registered trademark) 154 alone as the component [A]. Characteristics evaluation showed that the composite material had a fire retardance rating of V-1 at a thickness of 0.6-0.7 mm and V-0 at a thickness of 0.19-0.21 mm, and that the prepreg also had a satisfactory tackiness. Good characteristics were also proved in other aspects.

### (Comparative example 1)

Without adding the component [D], a cured resin and carbon fiber reinforced composite material were prepared using 15 parts by mass of PX-200 alone as the component [C] to adjust the phosphorus content to 1.1%. Characteristics evaluation showed that the composite material had a fire retardance rating of V-out at both thicknesses of 0.6-0.7 mm and 0.19-0.21 mm, failing to meet the requirements.

### (Comparative example 2)

Without adding the component [D], a cured resin, prepreg, and composite material were prepared under the conditions of using 30 parts by mass of CR-733S alone as the component [C] to adjust the phosphorus content to 2.3%. Characteristics evaluation showed that the composite material had a fire retardance rating of V-0 at both thicknesses of 0.6-0.7 mm and 0.19-0.21 mm. Though having a high elastic modulus of 4.1 GPa, furthermore, the cured resin had a low deflection of 1.9 mm, and the composite material and the moldings were also low in the 0° tensile strength and in the Charpy impact value, respectively.

### (Comparative example 3)

Without adding the component [C], a cured resin, prepreg, and composite material were prepared under the conditions of using 30 parts by mass of SPB-100 alone as the component [D] to adjust the phosphorus content to 2.8%. Characteristics evaluation showed that the cured resin had a low elastic modulus of 2.3 GPa, and the moldings had a large deflection and a small rigidity.

### (Comparative example 4)

A cured resin, prepreg, and composite material were prepared using 50 parts by mass of jER (registered trademark) 154 and 50 parts by mass of jER (registered trademark) 828 as the epoxy resin component, along with 10 parts by mass of PX-200 as the component [C] and 10 parts by mass of SPB-100 as the component [D] under the conditions where the compound represented by Formula (I) accounted for 42% in the component [A] and the phosphorus content was 1.7%. Characteristics evaluation showed that the composite material had a fire retardance rating of V-out at both thicknesses of 0.6-0.7 mm and 0.19-0.21 mm, failing to meet the requirements.

### (Comparative example 5)

A cured resin, prepreg, and composite material were prepared using jER (registered trademark) 154, jER (registered trademark) 828, jER (registered trademark) 834, and jER (registered trademark) 1001 as the epoxy resin component, along with 25 parts by mass of CR-733 as the component [C] under the conditions where the compound represented by Formula (I) accounted for 26% in the component [A] and the phosphorus content was 2.0%, and also using 5 parts by mass of Vinylec (registered trademark) K as thermoplastic resin. Characteristics evaluation showed that the gelation time was a longer 195 seconds and the composite material had a low Tg of 69°C. The moldings were also low in both the 0° tensile strength and the Charpy impact value.

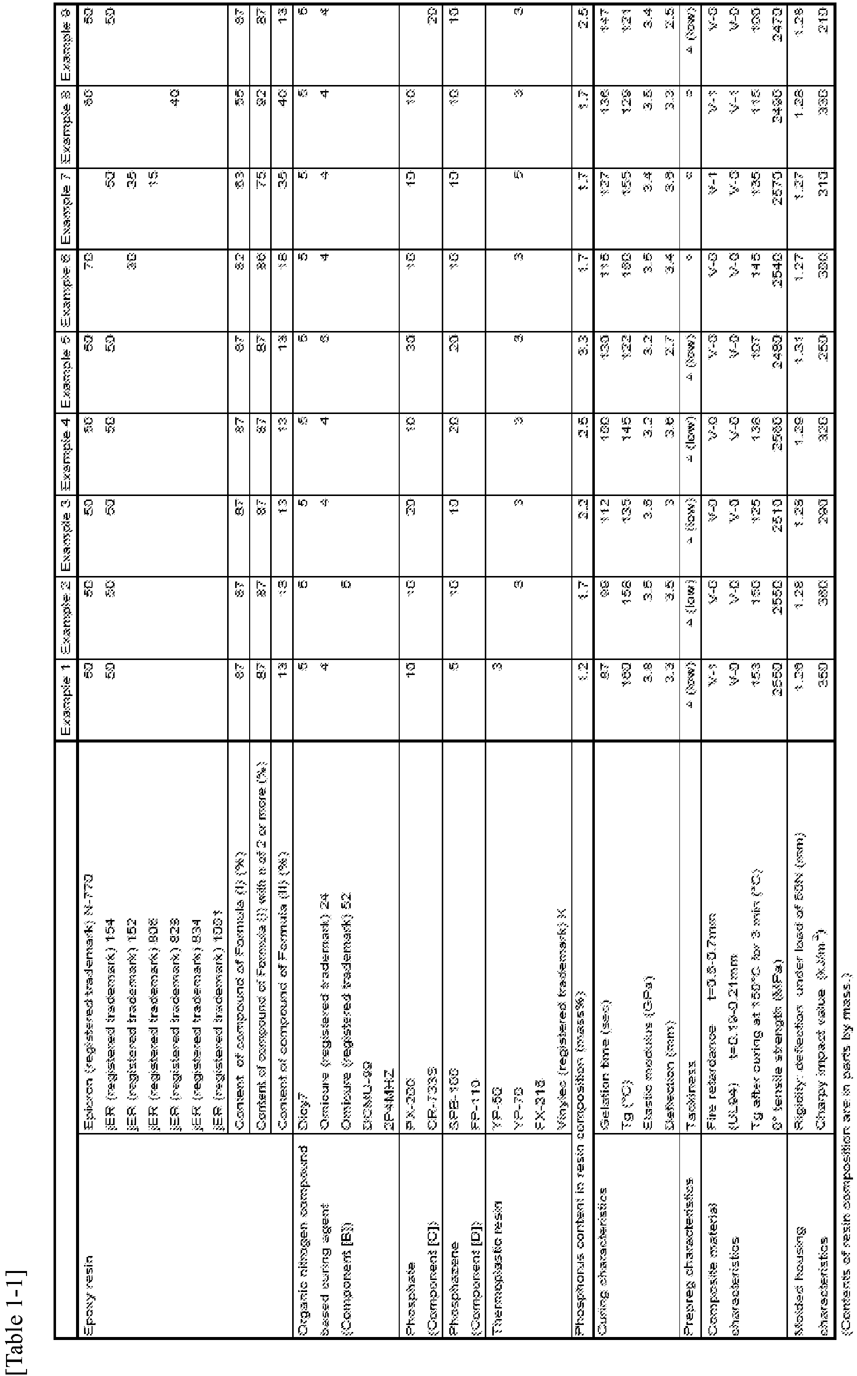

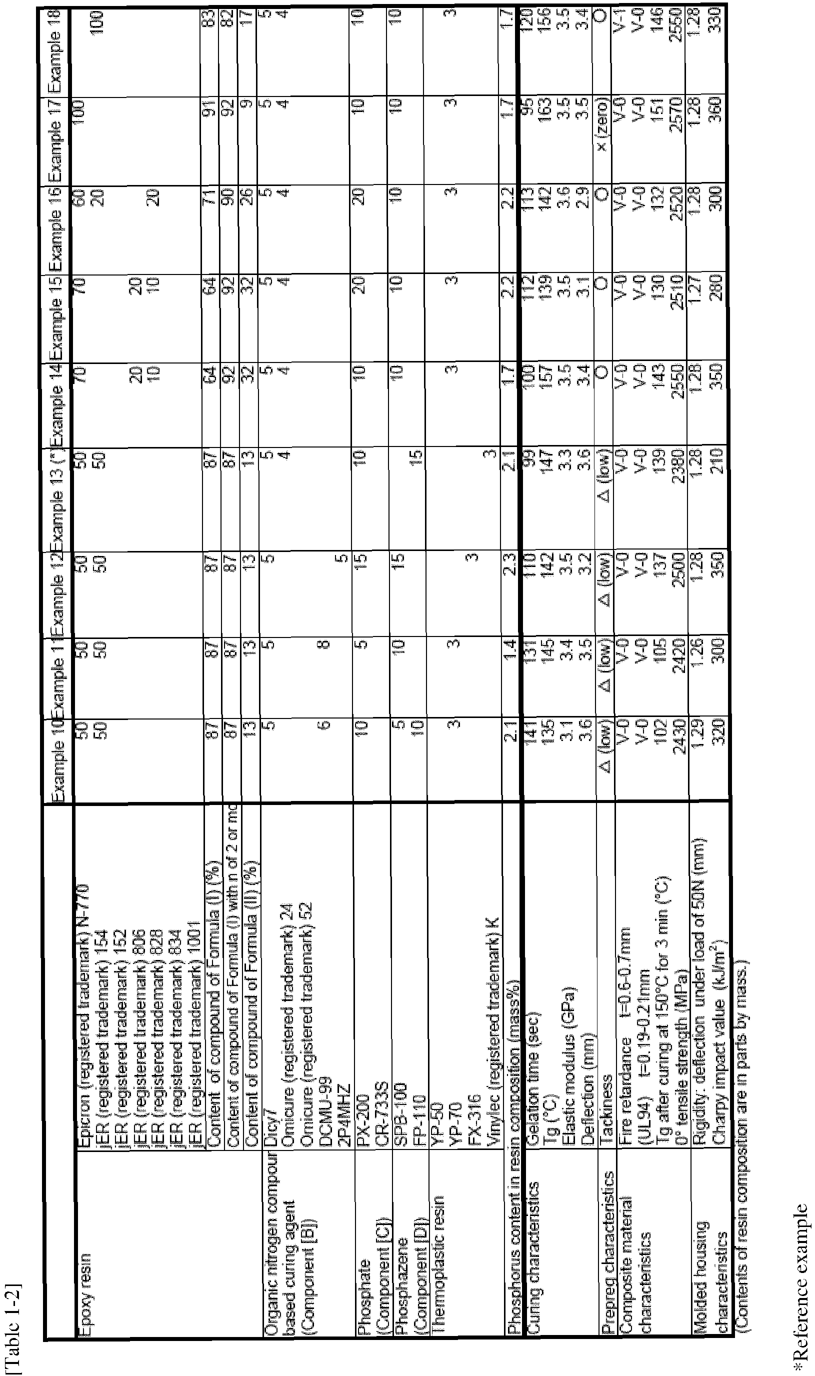

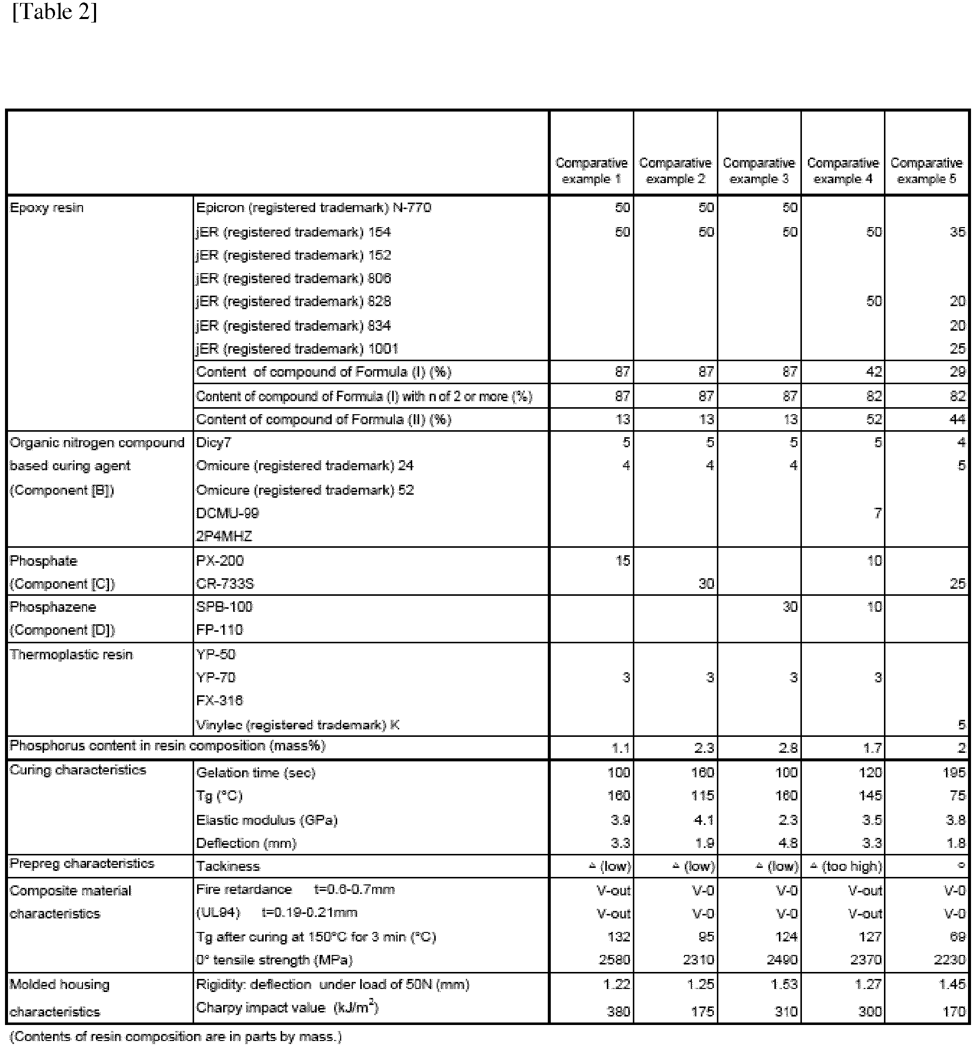

### [Industrial applicability]

The use of epoxy resin composition of the present invention serves to produce carbon fiber reinforced composite materials that are highly fire retardant, fast-curing, and heat resistant and have good mechanical characteristics. Carbon fiber reinforced composite materials produced from the epoxy resin composition of the present invention are used preferably for manufacturing housing for electronic/electric the components such as notebook computers, structural members of aircraft, vehicles, and windmill blades, and buildings.

## Claims

1. An epoxy resin composition comprising the following constituent components: an epoxy resin [A] in which 50 mass% or more is accounted for by a compound as represented by Formula (I) given below, a curing agent [B] based on an organic nitrogen compound, a phosphate [C], a phosphazene compound [D] and a thermoplastic resin which is in a phenoxy resin [E]: 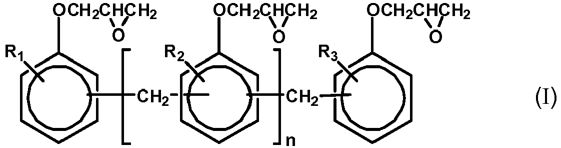 where R₁, R₂, and R₃ denote either a hydrogen atom or a methyl group, and n is an integer of 1 or higher.

2. An epoxy resin composition as claimed in claim 1 wherein a compound for which n is an integer of 2 or more accounts for 80 mass% or more of the compound of formula (I).

3. A prepreg produced by impregnating carbon fiber with an epoxy resin composition as claimed in either Claim 1 or 2.

4. A carbon fiber reinforced composite material produced by heating and curing a prepreg as claimed in Claim 3.

5. A carbon fiber reinforced composite material produced from a prepreg comprising an epoxy resin composition as claimed in Claim 1 or 2 that has a phosphorus content of 1.2 to 4 mass%, and a carbon fiber, wherein the fire retardance rating at a thickness 2 mm or less evaluated according to the UL94 combustion test is V-1 or higher.

6. A carbon fiber reinforced composite material production method comprising a step of molding a prepreg as claimed in Claim 3 wherein said step of molding is carried out by press molding.

7. Housing for electronic/electric components produced from a carbon fiber reinforced composite material as claimed in either Claim 4 or 5 or from a carbon fiber reinforced composite material produced by a method as claimed in Claim 6.

## Patentansprüche

1. Epoxidharzzusammensetzung, die die folgenden Bestandteile umfasst: ein Epoxidharz [A], in dem 50 Masseprozent oder mehr von einer Verbindung, die durch die nachstehende Formel (I) dargestellt wird, ausgemacht werden, ein auf einer organischen Stickstoffverbindung basierendes Härtungsmittel [B], ein Phosphat [C], eine Phosphazenverbindung [D] und ein thermoplastisches Harz, das in einem Phenoxyharz [E] ist: 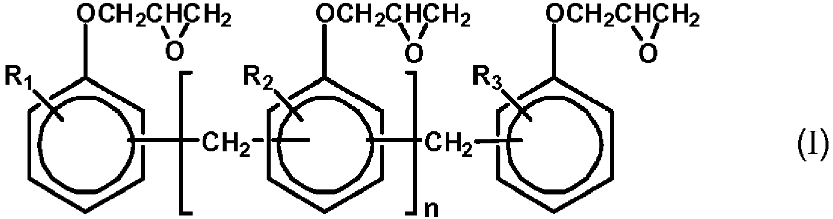 worin R₁, R₂ und R₃ entweder für ein Wasserstoffatom oder eine Methylgruppe stehen und n eine ganze Zahl von 1 oder mehr ist.

2. Epoxidharzzusammensetzung wie in Anspruch 1 beansprucht, wobei eine Verbindung, bei der n eine ganze Zahl 2 oder mehr ist, 80 Masseprozent oder mehr der Verbindung der Formel (l) ausmacht.

3. Prepreg, hergestellt durch Imprägnieren von Kohlenstofffaser mit einer Epoxidharzzusammensetzung wie in Anspruch 1 oder 2 beansprucht.

4. Kohlenstofffaserverstärktes Verbundmaterial, das durch Erwärmen und Härten eines Prepregs wie in Anspruch 3 beansprucht hergestellt wird.

5. Kohlenstofffaserverstärktes Verbundmaterial, das aus einem Prepreg hergestellt wird, das eine Epoxidharzzusammensetzung wie in Anspruch 1 oder 2 beansprucht, die einen Phosphorgehalt von 1,2 bis 4 Masseprozent aufweist, und eine Kohlenstofffaser umfasst, wobei die gemäß dem Verbrennungstest UL94 bewertete Brandschutzklasse bei einer Dicke von 2 mm oder weniger V-1 oder höher ist.

6. Verfahren zur Herstellung eines kohlenstofffaserverstärkten Verbundmaterials, das einen Schritt des Formens eines wie in Anspruch 3 beanspruchten Prepregs umfasst, wobei der Schritt des Formens durch Formpressen durchgeführt wird.

7. Gehäuse für elektronische/elektrische Komponenten, hergestellt aus einem kohlenstofffaserverstärkten Verbundmaterial wie in Anspruch 4 oder 5 beansprucht oder aus einem kohlenstofffaserverstärkten Verbundmaterial, hergestellt durch ein Verfahren wie in Anspruch 6 beansprucht.

## Revendications

1. Composition de résine époxy comprenant les composants constitutifs suivants : une résine époxy [A] dans laquelle 50 % en masse ou plus est constitué d'un composé tel que représenté par la formule (I) donnée ci-dessous, un agent de durcissement [B] à base d'un composé azoté organique, un phosphate [C], un composé phosphazène [D] et une résine thermoplastique qui se trouve dans une résine phénoxy [E] : 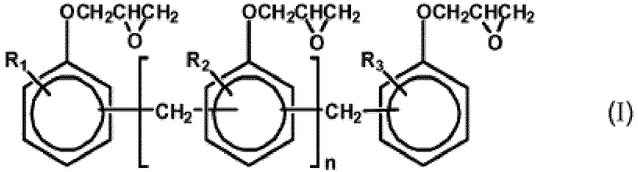 où R₁, R₂ et R₃ désignent un atome d'hydrogène ou un groupe méthyle, et n est un nombre entier égal à 1 ou plus.

2. Composition de résine époxy selon la revendication 1, dans laquelle un composé pour lequel n est un nombre entier égal à 2 ou plus constitue 80 % en masse ou plus du composé ayant la formule (I).

3. Préimprégné produit en imprégnant une fibre de carbone à l'aide d'une composition de résine époxy selon la revendication 1 ou 2.

4. Matériau composite renforcé par fibre de carbone produit en chauffant et en durcissant un préimprégné selon la revendication 3.

5. Matériau composite renforcé par fibre de carbone produit à partir d'un préimprégné comprenant une composition de résine époxy selon la revendication 1 ou 2, ayant une teneur en phosphore de 1,2 à 4 % en masse, et une fibre de carbone, dans lequel l'estimation de résistance au feu à une épaisseur de 2 mm ou moins évaluée conformément au test de combustion UL94 est égal à V-1 ou plus.

6. Procédé de production d'un matériau composite renforcé par fibre de carbone comprenant une étape de moulage d'un préimprégné selon la revendication 3, dans lequel ladite étape de moulage est réalisée par moulage à la presse.

7. Boîtier pour composants électroniques/électriques produit à partir d'un matériau composite renforcé par fibre de carbone selon la revendication 4 ou 5 ou à partir d'un matériau composite renforcé par fibre de carbone produit par un procédé selon la revendication 6.
